# EUROPÄISCHE PATENTSCHRIFT

(11) **EP 2 818 336 B1**
(45) Veröffentlichungstag und Bekanntmachung des Hinweises auf die Patenterteilung: **07.09.2016**
(21) Anmeldenummer: 13173791.8
(22) Anmeldetag: 26.06.2013
(51) Int. Cl.: B60C 23/00

(54) **Vorrichtung zur Regelung eines Drucks eines Fluids in einem Reifen eines Fahrzeugs**
Device for controlling a pressure of a fluid in a tyre of a vehicle
Dispositif de régulation de la pression d'un fluide dans un pneu de véhicule

(43) Veröffentlichungstag der Anmeldung: 31.12.2014
(73) Patentinhaber: Risse, Daniel, 59469 Ense (DE); Müller, Michael, 59557 Lippstadt (DE)
(72) Erfinder: Risse, Daniel, 59469 Ense (DE); Müller, Michael, 59557 Lippstadt (DE)
(74) Vertreter: Basfeld, Rainer

(56) Entgegenhaltungen:
- EP-A2- 0 365 953
- DE-A1-102009 037 803
- US-A- 2 849 047

## Beschreibung

Die vorliegende Erfindung betrifft eine Vorrichtung zur Regelung eines Drucks eines Fluids in einem Reifen eines Fahrzeugs gemäß dem Oberbegriff von Anspruch 1.

Solche Vorrichtungen werden vor allem im Bereich der Land- und Baumaschinen eingesetzt und ermöglichen eine Regelung des Reifendrucks. So kann der Reifendruck in Abhängigkeit von der Bodenbeschaffenheit und/oder der Beladung des Fahrzeugs geregelt werden.

Derartige Vorrichtungen sind aus dem Stand der Technik bekannt. Die DE 10 2010 054 366 A1 beschreibt eine Refendruckregelanlage für Fahrzeuge mit wenigstens einem, einen Reifen umfassenden Rad, mit einer fahrzeugseitigen Durckluftversorgung, mit je Rad einer zweikanaligen Drehdurchführung mit einer Versorgungsleitung und einer Steuerleitung und je Rad einer pneumatischen Ventilvorrichtung. Die Ventilvorrichtung ist dabei als pneumatisch entsperrbares Rückschlagventil ausgebildet.

Dabei steht entweder der Drehübertrager mitsamt seiner Dichtungen unter Druck oder an der Druckluftversorgung ist ein weiteres Ventil angeordnet, das geöffnet wird, wenn eine Versorgung des Reifens mit Druckluft erforderlich wird. Im ersten Fall wird der Drehübertrager und vor allem die Dichtungen bei einer Rotation des Reifens und der gleichzeitigen Druckbeaufschlagung stark belastet. Im zweiten Fall ist der Weg zwischen dem geöffneten Ventil und dem Reifen relativ lang, was zu einer hohen Trägheit des Systems und einem relativ hohen Druckverlust führt.

Die DE 10 2009 037 803 A1 offenbart eine Vorrichtung zur Einstellung des Gasdrucks in einem Kraftfahrzeugreifen. Die Vorrichtung umfasst ein im Bereich einer Radachse des Kraftfahrzeugs drehfest angeordnetes erstes Kanalelement, das einen Teil eines konzentrisch zur Radachse angeordneten Ringkanals bildet, welches erste Kanalelement einen Anschluss für eine mit einer Druckmittelquelle verbundene Druckmittelleitung aufweist. Außerdem umfasst die Vorrichtung ein zusammen mit dem Kraftfahrzeugrad drehbares zweites Kanalelement, das einen anderen Teil des Ringkanals bildet und über ein Einlassventil mit dem Innenraum des Kraftfahrzeugreifens verbunden ist. Das erste und das zweite Kanalelement sind mit ihren den Ringkanal bildenden Teilen einander zugewandt.

Die EP 0 365 953 A1 offenbart eine Reifendruckregelanlage für geländegängige Kraftfahrzeuge, die aus einer zentralen Ventilkombination, je einer Drehdurchführung für eine Druckluft-Versorgungsleitung und für eine Steuerleitung pro Rad und einer mitrotierenden Ventilkombination an den Rädern besteht.

Die US 2 849 047 A zeigt eine weitere Luftdruckregelanlage für Kraftfahrzeuge.

Demgegenüber liegt der Erfindung die Aufgabe zugrunde, eine sicherere und effizientere Vorrichtung zur Regelung eines Drucks eines Fluids in einem Reifen zu schaffen.

Diese Aufgabe wird durch die Merkmale von Anspruch 1 gelöst. Die Vorrichtung umfasst eine erste und eine zweite Baugruppe. Die erste Baugruppe ist dabei relativ zur zweiten Baugruppe drehbar gelagert. Dies kann beispielsweise durch ein Kugellager erfolgen. Die erste und die zweite Baugruppe können jeweils einstückig und/oder einteilig ausgebildet sein. Außerdem umfasst die Vorrichtung einen Hohlraum, der sich sowohl innerhalb der ersten Baugruppe als auch innerhalb der zweiten Baugruppe erstreckt. Der Hohlraum kann beispielsweise eine oder mehrere miteinander verbundene Bohrungen in der ersten und der zweiten Baugruppe umfassen. Es ist zu beachten, dass der Hohlraum sich auch bei einer Drehung der ersten Baugruppe relativ zur zweiten Baugruppe durch die beiden Baugruppen erstreckt. Der Hohlraum kann auch als Teil einer Versorgungsleitung für den Reifen bezeichnet werden, über die der Reifen mit dem Fluid versorgt werden kann.

Unter einem Fluid wird hier insbesondere ein gasförmiger und/oder flüssiger Stoff verstanden. Beispielsweise kann das Fluid Luft oder Druckluft sein.

Ferner umfasst die Vorrichtung einen Quellanschluss zur Verbindung des Hohlraums mit einer Druckfluidquelle. Die Druckfluidquelle kann beispielsweise ein Druckluftkompressor sein. Vorzugsweise ist die Druckfluidquelle ausschließlich für die Versorgung des Reifens mit dem Fluid ausgebildet. Die Druckfluidquelle kann auch Bestandteil der Vorrichtung sein.

Ferner umfasst die Vorrichtung einen Reifenanschluss zur Verbindung des Hohlraums mit dem Reifen und ein erstes innerhalb des Hohlraums angeordnetes pneumatisch entsperrbares Rückschlagventil. Das pneumatisch entsperrbare Rückschlagventil kann beispielsweise einen Ventilbolzen umfassen, die an ihren beiden gegenüberliegenden Enden Druckflächen aufweist. Die beiden Druckflächen sind also durch den Ventilbolzen miteinander verbunden. Das Ventil lässt sich durch Beaufschlagung der Druckflächen mit einem Druck eines Fluids bewegen. So kann das Ventil durch Beaufschlagung einer der Druckflächen mit einem Steuerdruck entsperrt werden. Außerdem können an dem Ventil Federmittel angeordnet sein, die dazu ausgebildet sind, das Ventil in einem Zustand ohne Druckbeaufschlagung in einer Sperrstellung zu halten.

Des Weiteren umfasst die Vorrichtung einen Drucksensor und Steuermittel, die dazu ausgebildet sind, das erste Rückschlagventil in Abhängigkeit eines vom Drucksensor empfangenen Signals zu steuern. Das Signal vom Drucksensor zu den Steuermitteln kann beispielsweise drahtlos oder auch drahtgebunden, insbesondere über ein drahtloses Netzwerk wie etwa WLAN, übertragen werden. Außerdem können die Steuermittel für eine Steuerung der Druckfluidquelle ausgebildet sein.

Die Vorrichtung umfasst außerdem zumindest ein zweites innerhalb des Hohlraums angeordnetes pneumatisch entsperrbares Rückschlagventil. Auch das zweite Ventil kann durch die Steuermittel gesteuert werden. Das erste Ventil ist dabei in der ersten Baugruppe und das zweite Ventil in der zweiten Baugruppe angeordnet. Diese Anordnung der Ventile in dem Hohlraum ermöglicht es, dass eine von der Druckfluidquelle zu dem Quellanschluss führende Leitung - beispielsweise ein Schlauch - unter Druck stehen kann, ohne dass der Hohlraum und die den Hohlraum abdichtenden Dichtungen mit diesem Druck beaufschlagt werden. So werden die Dichtungen und die erste und die zweite Baugruppe geschont und gleichzeitig werden kurze Wege für das Fluid geschaffen, wenn es in den Reifen strömen soll. Dies reduziert den Gesamtdruckverlust der Vorrichtung erheblich und erlaubt bei Druckmessungen innerhalb des Hohlraums wegen der relativ geringen bewegten und für eine genaue Messung zu beruhigenden Masse sehr kurze Messzyklen. Ein weiterer Vorteil ist die erhöhte Sicherheit. Falls eines der Ventile defekt ist, so ist die Verbindung des Reifens mit der Druckfluidquelle immer noch durch das andere der Ventile sperrbar.

Die Vorrichtung kann beispielsweise innerhalb oder an einer Radnabe eines Rads des Fahrzeugs angeordnet sein. Die erste Baugruppe kann dabei mit dem Rad rotieren, während die zweite Baugruppe relativ zur Karosserie des Fahrzeugs ortsfest angeordnet sein kann.

Das erste Ventil ist dazu ausgebildet, eine Strömung des Fluids von dem Hohlraum durch den Reifenanschluss und umgekehrt, also von dem Reifenanschluss in den Hohlraum, zu steuern. Unter der Steuerung der Strömung durch ein Ventil wird dabei insbesondere verstanden, dass das Ventil in eine Sperrstellung und in eine Durchlassstellung gestellt werden kann. In der Durchlassstellung kann das Fluid das Ventil passieren, während in der Sperrstellung das Ventil die Strömung des Fluids blockiert.

Das zweite Ventil ist dazu ausgebildet, eine Strömung des Fluids durch en Quellanschluss in den Hohlraum zu steuern. Mit anderen Worten kann das erste Ventil in der Sperrstellung eine Strömung des Fluids in den Reifen blockieren. Das zweite Ventil kann in der Sperrstellung eine Strömung des Fluids von der Druckfluidquelle in den Hohlraum blockieren.

Nach einer Ausführungsform der Erfindung kann die Vorrichtung einen Ablassanschluss zur direkten Verbindung des Hohlraums mit einem Umgebungsmedium und ein drittes pneumatisch entsperrbares Ventil umfassen. Das dritte Ventil kann dazu ausgebildet sein, eine Strömung des Fluids von dem Hohlraum durch den Ablassanschluss zu steuern. Das dritte Ventil kann beispielsweise in der zweiten Baugruppe angeordnet sein. Das Umgebungsmedium kann beispielsweise die Umgebungsluft des Fahrzeugs sein. Über den Ablassanschluss kann der Hohlraum also mit dem Atmosphärendruck verbunden werden, sodass ein Druckunterschied zwischen dem Atmosphärendruck und dem Druck im Hohlraum ausgeglichen wird.

Unter Verwendung der drei Ventile kann eine Befüllung des Reifens mit dem Fluid also dadurch erreicht werden, dass das erste und das zweite Ventil in die Durchlassstellung gestellt werden, sodass das Fluid von der Druckquelle in den Reifen strömen kann. Ein Entlüften des Reifens kann dadurch erfolgen, dass das erste Ventil und das dritte Ventil in die Durchlassstellung gestellt werden.

Nach einer Ausführungsform der Erfindung kann die Vorrichtung zumindest eine Steuerfluidquelle umfassen, die über zumindest eine Steuerleitung mit den Ventilen verbunden ist. Die Steuerfluidquelle kann durch die Steuermittel steuerbar sein, sodass die Steuermittel die Ventile durch Steuerung der Steuerfluidquelle steuern kann. Beispielsweise kann ein Ventil in die Durchlasssstellung schaltbar sein, wenn es mit dem Steuerfluid mit einem ausreichend hohen Druck aus der Steuerfluidquelle beaufschlagt wird. Das Steuerfluid kann beispielsweise Luft oder eine Hydraulikflüssigkeit sein. Innerhalb der zumindest einen Steuerleitung können Steuerventile angeordnet sein, die beispielsweise elektromagnetisch steuerbar sind. Die Steuermittel sind dazu ausgebildet, die Steuerventile zu steuern. So kann gezielt eines der pneumatisch entsperrbaren Ventile gesteuert werden. Es ist auch möglich, dass mehrere Steuerleitungen mit der Steuerfluidquelle verbunden sind. So kann beispielsweise jedes der Steuerventile über eine Steuerleitung mit der Steuerfluidquelle verbunden sein. So können die pneumatisch entsperrbaren Ventile ebenfalls gezielt gesteuert werden.

Nach einer Ausführungsform der Erfindung kann die Steuerfluidquelle Bestandteil eines Bremssystems des Fahrzeugs sein. In diesem Fall kann auch die zumindest eine Steuerleitung zum Teil Bestandteil des Bremssystems sein. Mit anderen Worten können sowohl die Steuerfluidquelle als auch zumindest ein Teil der zumindest einen Steuerleitung sowohl durch die Vorrichtung als auch durch das Bremssystem genutzt werden.

Nach einer Ausführungsform kann die Vorrichtung Dichtmittel umfassen, die dazu ausgebildet sind, einen Teilbereich eines Ventilbolzens jedes der Ventile gegenüber dem Hohlraum abzudichten. Der Ventilbolzen verläuft dabei zwischen den beiden Druckflächen des Ventils, auf die das Steuerfluid und das Fluid aus der Druckfluidquelle und/oder dem Reifen einwirken können. Die Abdichtung eines Teilbereichs des Ventilbolzens gegenüber dem Hohlraum hat insbesondere den Vorteil, dass dieser Teilbereich nicht durch einen im Hohlraum vorhandenen Druck beaufschlagt wird, sodass das Ventil einfacher gesteuert werden kann. Es wird ein geringerer Druck des Steuerfluids benötigt, um das Ventil in die Durchlassstellung zu schalten.

Nach einer Ausführungsform der Erfindung kann die erste Baugruppe dazu ausgebildet sein, an einem den Reifen umfassenden Rad befestigt zu werden und bei einer Rotation des Rads mit zu rotieren. Durch die drehbare Lagerung der zweiten Baugruppe rotiert die zweite Baugruppe in diesem Fall nicht mit. So kann also die zweite Baugruppe beispielsweise über Leitungen mit fahrzeugfesten Bauteilen verbunden oder an fahrzeugfesten Bauteilen befestigt sein, während die erste Baugruppe mit dem Rad rotieren kann. Die erste Baugruppe kann auch als radseitige Baugruppe und die zweite Baugruppe als fahrzeugseitige Baugruppe bezeichnet werden, wobei zu beachten ist, dass die zweite Baugruppe nur über Leitungen - wie beispielsweise Schläuche - mit fahrzeugfesten Bauteilen verbunden sein kann. In solch einem Fall wird die zweite Baugruppe an ihrer Position im Wesentlichen durch die erste Baugruppe gehalten. Die erste Baugruppe kann auch als Rotor und die zweite Baugruppe als Stator beschrieben werden.

Nach einer Ausführungsform der Erfindung kann der Drucksensor in dem Hohlraum angeordnet oder mit dem Hohlraum verbunden sein. Hierfür kann beispielsweise der Hohlraum einen weiteren Anschluss für den Drucksensor umfassen. Der Druck wird also in dem Hohlraum gemessen. Es ist nicht zwangsläufig erforderlich, dass ein weiterer Drucksensor im Reifen vorhanden ist. Bei einer Änderung des Drucks im Reifen herrscht dieser geänderte Druck auch zumindest für einen kurzen Zeitraum im Hohlraum, sodass eine zuverlässige Messung gewährleistet ist.

Sowohl bei einer Erhöhung als auch bei einer Verringerung des Drucks im Reifen ist das erste Ventil in der Durchlassstellung, sodass der Druck im Reifen im Wesentlichen identisch mit dem Druck im Hohlraum ist. Durch den Verzicht auf eine direkte Messung im Reifen kann die Vorrichtung für jeden beliebigen Reifen verwendet werden. Die aufwändige nachträgliche Installation eines Drucksensors in dem Reifen kann entfallen.

Nach einer Ausführungsform der Erfindung kann die Steuerfluidquelle und die Strömung eines aus der Steuerfluidquelle austretenden und durch die Steuerleitung strömenden Steuerfluids durch die Steuermittel steuerbar sein. Die Steuermittel können insbesondere dazu ausgebildet sein, die Steuerfluidquelle und die Strömung des Steuerfluids zumindest teilweise drahtlos zu steuern. Die Strömung des Steuerfluids kann beispielsweise durch Steuerung von Ventilen in oder an der Steuerfluidquelle und/oder in den Steuerleitungen erfolgen.

Nach einer Ausführungsform der Erfindung kann die Vorrichtung zur individuellen Regelung eines Reifendrucks in jedem Reifen des Fahrzeugs ausgebildet sein. Es ist hierfür möglich, dass gemeinsame Steuermittel, eine gemeinsame Druckfluidquelle und eine gemeinsame Steuerfluidquelle für alle Reifen verwendet werden. Die übrigen Merkmale der Vorrichtung, wie beispielsweise die erste und zweite Baugruppe mit dem Hohlraum und den Anschlüssen und Ventilen, können mehrfach, beispielsweise für jeden der Reifen einmal, vorgesehen sein.

Es ist auch möglich, dass mittels der Vorrichtung nicht nur der Druck der Reifen des Fahrzeugs, sondern auch der Druck der Reifen eines Anhängers geregelt wird.

Weiterhin besteht die Möglichkeit, dass der Druck im Reifen in regelmäßigen Abständen geprüft wird. Hierfür kann das erste Ventil in die Durchlassstellung geschaltet werden, sodass im Hohlraum der Reifendruck herrscht, der dann gemessen wird. Die aus dem Reifen entwichene Luft kann durch Öffnung des zweiten Ventils und Betrieb der Druckfluidquelle zurück in den Reifen strömen. Eine weitere Möglichkeit besteht darin, den benötigten Druck des Steuerfluids für die Schaltung des ersten Ventils in die Durchlassstellung zu bestimmen. Dieser entspricht aufgrund der Konstruktion des Ventils in etwa dem Reifendruck.

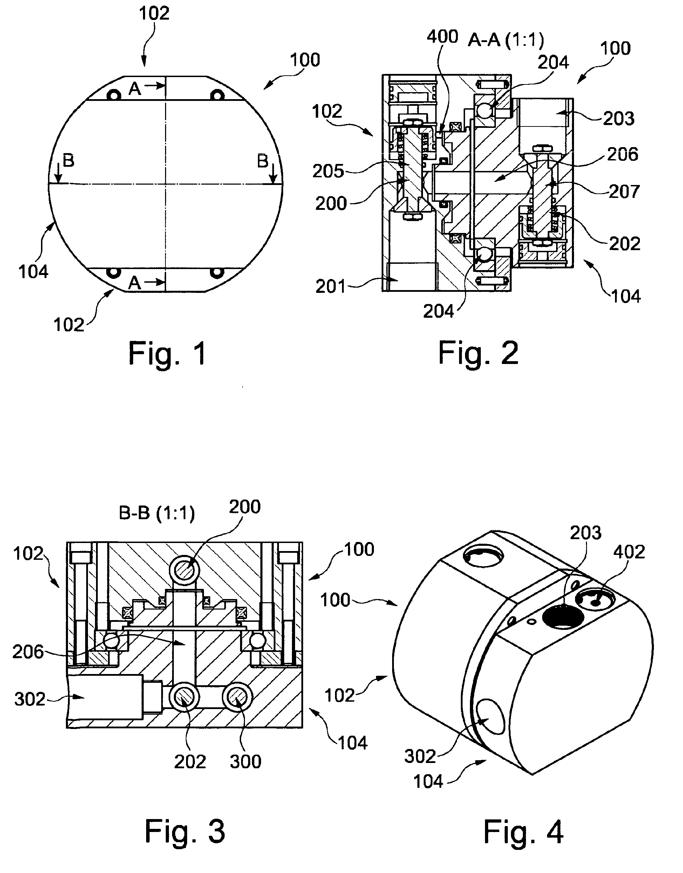

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Dabei werden die gleichen Bezugszeichen für die gleichen oder ähnliche Bauteile oder Bauteile mit gleichen oder ähnlichen Funktionen verwendet Darin zeigen
- Fig. 1: eine schematische Frontansicht einer Vorrichtung nach einer Ausführungsform der Erfindung;
- Fig. 2: eine Schnittansicht gemäß der Schnittfläche A-A aus Figur 1;
- Fig. 3: eine Schnittansicht gemäß der Schnittfläche B-B aus Figur 1;
- Fig. 4: eine perspektivische schematische Ansicht der Vorrichtung aus den Figuren 1 bis 3;
- Fig. 5: eine perspektivische schematische Seitenansicht der Vorrichtung aus den Figuren 1 bis 4;
- Fig. 6: eine Schnittansicht gemäß der Schnittfläche C-C aus Figur 5;
- Fig. 7: eine schematische Ansicht der Vorrichtung aus den Figuren 1 bis 6;

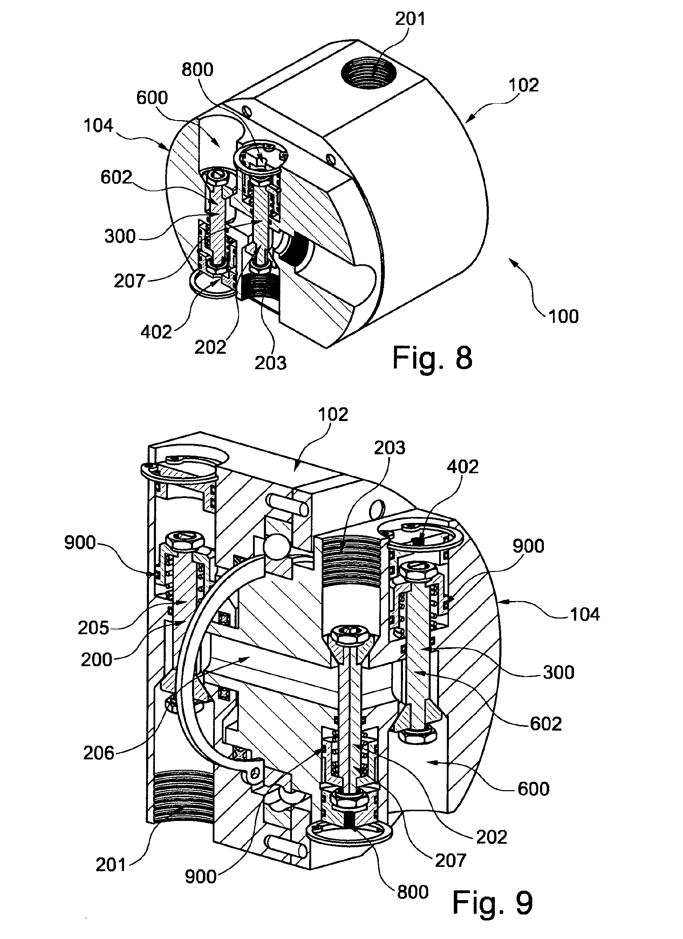

- Fig. 8: ein perspektivische Halbschnittansicht der Vorrichtung aus den Figuren 1 bis 7; und
- Fig. 9: eine perspektivische Viertelschnittansicht der Vorrichtung aus den Figuren 1 bis 8.

In den Figuren ist eine Vorrichtung 100 mit einer ersten Baugruppe 102 und einer zweiten Baugruppe 104 dargestellt. Die erste Baugruppe 100 ist relativ zur zweiten Baugruppe 102 drehbar über ein Kugellager 204 gelagert. In der ersten Baugruppe 102 ist ein erstes Ventil 200 und ein erster Anschluss 201 angeordnet. Der erste Anschluss 201 ist für die Verbindung mit einem Reifen eines Fahrzeugs ausgebildet. Das erste Ventil 200 ist ein pneumatisch entsperrbares Rückschlagventil.

In der zweiten Baugruppe 104 ist ein zweites Ventil 202 und ein zweiter Anschluss 203 angeordnet. Der zweite Anschluss 203 ist für eine Verbindung mit einer Druckfluidquelle, wie etwa einem Druckluftkompressor, ausgebildet. Auch das zweite Ventil 202 ist als pneumatisch entsperrbares Rückschlagventil ausgebildet.

Zwischen dem ersten Ventil 200 und dem zweiten Ventil 202 ist ein Hohlraum 206 angeordnet, der sich durch die erste Baugruppe 102 und die zweite Baugruppe 104 erstreckt. Bei einer Öffnung des ersten Ventils 202 ist der Hohlraum 206 mit dem Anschluss 203 verbunden, sodass ein Fluid mit einem Druck aus einer angeschlossenen Druckfluidquelle in den Hohlraum 206 strömen kann. Bei einer Öffnung des zweiten Ventils 200 ist der Hohlraum 206 mit dem Anschluss 201 verbunden, sodass ein Fluid von dem Hohlraum 206 in einen angeschlossenen Reifen und umgekehrt strömen kann.

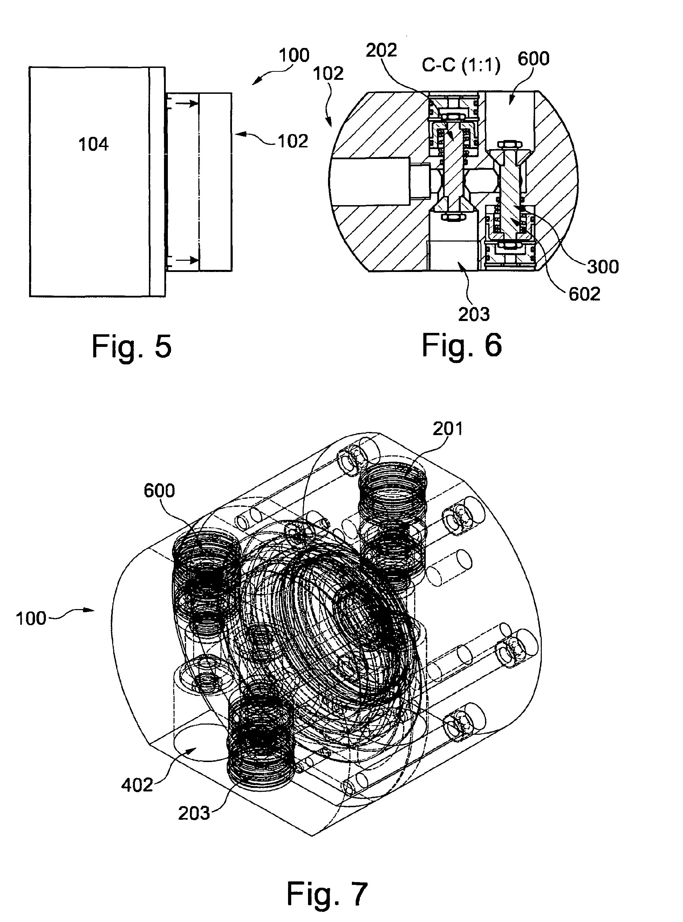

In der zweiten Baugruppe 104 ist außerdem ein drittes Ventil 300 und ein Anschluss 600 (siehe Figur 6) angeordnet. Der Anschluss 206 kann entweder direkt oder über eine Leitung mit einem Umgebungsmedium verbunden sein Bei einer Öffnung des dritten Ventils 300 kann ein Fluid aus dem Hohlraum 206 herausströmen.

Das Umgebungsmedium weist Atmosphärendruck auf, sodass ein Überdruck im Hohlraum 206 abgebaut werden kann.

Außerdem ist in der zweiten Baugruppe 104 ein Anschluss 302 für einen Drucksensor vorgesehen. Der Drucksensor misst den Druck innerhalb des Hohlraums 206.

Die Vorrichtung 100 weist außerdem mehrere Anschlüsse 400, 402 und 800 auf. Diese Anschlüsse 400, 402 und 800 dienen der Steuerung der pneumatisch entsperrbaren Rückschlagventile 200, 202 und 300. An jeden der Anschlüsse 400, 402 und 800 kann eine Steuerleitung angeschlossen werden, durch die ein Steuerfluid aus einer Steuerfluidquelle strömen kann. Steuermittel der Vorrichtung 100 können die Strömung des Steuerfluids und die Steuerfluidquelle so steuern, dass die Ventile 200, 202 und 300 gesteuert werden können. Wenn das erste Ventil 200 in seine Durchlassstellung geschaltet werden soll, wird der Anschluss 400 der Vorrichtung 100 mit einem ausreichen hohen Druck des Steuerfluids beaufschlagt. Wenn das zweite Ventil 202 in seine Durchlassstellung geschaltet werden soll, wird der Anschluss 800 mit einem ausreichend hohen Druck des Steuerfluids beaufschlagt. Wenn das dritte Ventil 300 in seine Durchlassstellung geschaltet werden soll, wird der Anschluss 402 mit einem ausreichend hohen Druck des Steuerfluids beaufschlagt. So lassen sich die drei Ventile 200, 202 und 300 gezielt schalten.

Über nicht dargestellte Steuermittel kann ein Benutzer einen gewünschten Reifendruck wählen. Dieser kann beispielsweise auf den Untergrund und/oder auf die Beladung des Fahrzeugs abgestimmt sein. Wenn eine Erhöhung des Drucks im Reifen erforderlich wird, weil der vom Benutzer gewählte Reifendruck geringer als der tatsächliche Reifendruck ist, veranlassen die Steuermittel eine Entsperrung der Ventile 200 und 202 durch Beaufschlagung der Anschlüsse 400 und 800 mit einem ausreichend hohen Druck des Steuerfluids. Die Ventile 200 und 202 werden daraufhin in ihre Durchlassstellung geschaltet, sodass ein Fluid wie beispielsweise Druckluft durch den Anschluss 203 und den Hohlraum 206 in den Reifen strömen kann.

Besonders vorteilhaft ist hier, dass im regelfreien Zustand, wenn also der gewählte Reifendruck mit dem tatsächlichen Reifendruck im Wesentlichen übereinstimmt, der Hohlraum 206 sowohl gegenüber dem Reifen als auch gegenüber der Druckfluidquelle durch die Ventile 200 und 202 abgedichtet ist. So herrscht im Hohlraum 206 nach einem kurzen Druckausgleich durch Öffnung des dritten Ventils 402 Atmosphärendruck. Dies schont die Dichtungen des Hohlraums 206. Außerdem liegt in dem Anschluss 203 der Druck der Druckfluidquelle an, sodass bei einer Öffnung des ersten Ventils 200 der Weg für das Fluid in den Hohlraum 206 und in den Reifen äußerst kurz ist, sodass der Wirkungsgrad der Vorrichtung 100 besonders gut ist. Außerdem ist die Masse des strömenden Fluids aufgrund dieser kurzen Distanz so gering, dass besonders kurze Messzyklen für den Druck im Hohlraum 206 möglich sind.

Jedes der Ventile 200, 202 und 300 weist zwei Druckflächen auf, die miteinander durch einen Ventilbolzen 205, 207, 602 verbunden sind. An jedem der Ventile 200, 202 und 300 sind außerdem Dichtmittel 900 angeordnet, die einen Teilbereich des Ventilbolzens 205, 207, 602 zu dem Hohlraum 206 abdichten, sodass nicht der gesamte Ventilbolzen 205, 207, 602 dem im Hohlraum 206 herrschenden Druck ausgesetzt ist. Dies vereinfacht die Entsperrung der Ventile 200, 202 und 300 durch Beaufschlagung mit dem Steuerfluid.

## Patentansprüche

1. Vorrichtung (100) zur Regelung eines Drucks eines Fluids in einem Reifen eines Fahrzeugs, umfassend:
- eine erste Baugruppe (102) und eine zweite Baugruppe (104), wobei die erste Baugruppe (102) relativ zur zweiten Baugruppe (104) drehbar gelagert ist;
- einen Hohlraum (206), der sich sowohl innerhalb der ersten Baugruppe (102) als auch innerhalb der zweiten Baugruppe (104) erstreckt;
- zumindest einen Quellanschluss (203) zur Verbindung des Hohlraums (206) mit einer Druckfluidquelle;
- zumindest einen Reifenanschluss (201) zur Verbindung des Hohlraums (206) mit dem Reifen;
- ein erstes innerhalb des Hohlraums (206) angeordnetes Ventil (200);
- zumindest einen Drucksensor;
- Steuermittel;
- zumindest ein zweites innerhalb des Hohlraums (206) angeordnetes pneumatisch entsperrbares Rückschlagventil (202), das durch die Steuermittel steuerbar ist;
wobei das erste Ventil (200) in der ersten Baugruppe (102) und das zweite Ventil (202) in der zweiten Baugruppe (104) angeordnet ist
**dadurch gekennzeichnet, dass**
das erste Ventil (200) ein pneumatisch entsperrbares Rückschlagventil ist, dass die Steuermittel dazu ausgebildet sind, das erste Ventil (200) in Abhängigkeit eines vom Drucksensor empfangenen Signals zu steuern und dass das erste Ventil (200) dazu ausgebildet ist, eine Strömung des Fluids von dem Hohlraum (206) durch den Reifenanschluss (201) und umgekehrt zu steuern, und dass das zweite Ventil (202) dazu ausgebildet ist, eine Strömung des Fluids durch den Quellanschluss (203) in den Hohlraum (206) zu steuern.

2. Vorrichtung (100) nach Anspruch 1, **dadurch gekennzeichnet, dass** die Vorrichtung (100) einen Ablassanschluss (600) zur direkten Verbindung des Hohlraums (206) mit einem Umgebungsmedium und ein drittes pneumatisch entsperrbares Ventil (300) umfasst, wobei das dritte Ventil (300) dazu ausgebildet ist, eine Strömung des Fluids von dem Hohlraum (206) durch den Ablassanschluss (600) zu steuern.

3. Vorrichtung (100) nach zumindest einem der vorhergehenden Ansprüche, **dadurch gekennzeichnet, dass** die Vorrichtung (100) zumindest eine Steuerfluidquelle umfasst, die über zumindest eine Steuerleitung mit den Ventilen (200; 202; 300) verbunden ist.

4. Vorrichtung (100) nach Anspruch 3, **dadurch gekennzeichnet, dass** die Steuerfluidquelle Bestandteil eines Bremssystems des Fahrzeugs ist.

5. Vorrichtung (100) nach zumindest einem der vorhergehenden Ansprüche, **dadurch gekennzeichnet, dass** die Vorrichtung (100) Dichtmittel (900) umfasst, die dazu ausgebildet sind, einen Teilbereich eines Ventilbolzens (205; 207; 602) jedes der Ventile (200; 202; 300) gegenüber dem Hohlraum (206) abzudichten.

6. Vorrichtung (100) nach zumindest einem der vorhergehenden Ansprüche, **dadurch gekennzeichnet, dass** die erste Baugruppe (102) dazu ausgebildet ist, an einem den Reifen umfassenden Rad befestigt zu werden und bei einer Rotation des Rads mit zu rotieren.

7. Vorrichtung (100) nach zumindest einem der vorhergehenden Ansprüche, **dadurch gekennzeichnet, dass** die zweite Baugruppe (104) dazu ausgebildet ist, bei einer Rotation des Reifens nicht mit zu rotieren.

8. Vorrichtung (100) nach zumindest einem der vorhergehenden Ansprüche, **dadurch gekennzeichnet, dass** das Fluid Luft ist und dass die Druckfluidquelle ein Druckluftkompressor ist.

9. Vorrichtung (100) nach zumindest einem der vorhergehenden Ansprüche, **dadurch gekennzeichnet, dass** der Drucksensor in dem Hohlraum (206) angeordnet oder mit dem Hohlraum (206) verbunden ist.

10. Vorrichtung (100) nach zumindest einem der vorhergehenden Ansprüche, **dadurch gekennzeichnet, dass** die Steuermittel zur Steuerung der Ventile (200; 202; 300) und der Druckfluidquelle ausgebildet sind.

11. Vorrichtung (100) nach dem vorhergehenden Anspruch, **dadurch gekennzeichnet, dass** die Steuerfluidquelle und die Strömung eines aus der Steuerfluidquelle austretenden und durch die Steuerleitung strömenden Steuerfluids durch die Steuermittel steuerbar sind, wobei die Steuermittel dazu ausgebildet sind, die Steuerfluidquelle und die Strömung des Steuerfluids zumindest teilweise drahtlos zu steuern.

12. Vorrichtung (100) nach zumindest einem der Ansprüche 10 oder 11, **dadurch gekennzeichnet, dass** die zweite Baugruppe (104) ausschließlich mit der ersten Baugruppe (102) und biegbaren Fluidleitungen verbunden ist.

13. Vorrichtung (100) nach zumindest einem der vorhergehenden Ansprüche, **dadurch gekennzeichnet, dass** die Vorrichtung (100) zur individuellen Regelung eines Reifendrucks in jedem Reifen des Fahrzeugs ausgebildet ist.

## Claims

1. Apparatus (100) for controlling a pressure of a fluid in a tyre of a vehicle, comprising:
- a first assembly (102) and a second assembly (104), the first assembly (102) being mounted such that it can be rotated relative to the second assembly (104);
- a cavity (206) which extends both within the first assembly (102) and within the second assembly (104);
- at least one source connector (203) for connecting the cavity (206) to a pressurized fluid source;
- at least one tyre connector (201) for connecting the cavity (206) to the tyre;
- a first valve (200) which is arranged within the cavity (206);
- at least one pressure sensor;
- control means;
- at least one second pneumatically unlockable check valve (202) which is arranged within the cavity (206) and can be controlled by way of the control means;
the first valve (200) being arranged in the first assembly (102) and the second valve (202) being arranged in the second assembly (104),
**characterized in that**
the first valve (200) is a pneumatically unlockable check valve, **in that** the control means are configured to control the first valve (200) in a manner which is dependent on a signal which is received from the pressure sensor, and **in that** the first valve (200) is configured to control the flow of the fluid from the cavity (206) through the tyre connector (201) and vice versa, and **in that** the second valve (202) is configured to control the flow of the fluid through the source connector (203) into the cavity (206).

2. Apparatus (100) according to Claim 1, **characterized in that** the apparatus (100) comprises a discharge connector (600) for the direct connection of the cavity (206) to a surrounding medium, and a third pneumatically unlockable valve (300), the third valve (300) being configured to control the flow of the fluid from the cavity (206) through the discharge connector (600).

3. Apparatus (100) according to at least one of the preceding claims, **characterized in that** the apparatus (100) comprises at least one control fluid source which is connected via at least one control line to the valves (200; 202; 300).

4. Apparatus (100) according to Claim 3, **characterized in that** the control fluid source is a constituent part of a braking system of the vehicle.

5. Apparatus (100) according to at least one of the preceding claims, **characterized in that** the apparatus (100) comprises sealing means (900) which are configured to seal a part region of a valve bolt (205; 207; 602) of each of the valves (200; 202; 300) with respect to the cavity (206).

6. Apparatus (100) according to at least one of the preceding claims, **characterized in that** the first assembly (102) is configured to be fastened to a wheel which comprises the tyre and to rotate with the wheel during a rotation of the said wheel.

7. Apparatus (100) according to at least one of the preceding claims, **characterized in that** the second assembly (104) is configured to not rotate with the tyre during a rotation of the said tyre.

8. Apparatus (100) according to at least one of the preceding claims, **characterized in that** the fluid is air, and **in that** the pressurized fluid source is a compressed air compressor.

9. Apparatus (100) according to at least one of the preceding claims, **characterized in that** the pressure sensor is arranged in the cavity (206) or is connected to the cavity (206).

10. Apparatus (100) according to at least one of the preceding claims, **characterized in that** the control means are configured for controlling the valves (200; 202; 300) and the pressurized fluid source.

11. Apparatus (100) according to the preceding claim, **characterized in that** the control fluid source and the flow of control fluid which exits from the control fluid source and flows through the control line can be controlled by way of the control means, the control means being configured to control the control fluid source and the flow of the control fluid at least partially in a wireless manner.

12. Apparatus (100) according to at least one of Claims 10 and 11, **characterized in that** the second assembly (104) is connected exclusively to the first assembly (102) and flexible fluid lines.

13. Apparatus (100) according to at least one of the preceding claims, **characterized in that** the apparatus (100) is configured to individually control a tyre pressure in each tyre of the vehicle.

## Revendications

1. Dispositif (100) pour la régulation de la pression d'un fluide dans un pneu de véhicule, comprenant :
- un premier module (102) et un deuxième module (104), le premier module (102) étant supporté de manière à pouvoir tourner par rapport au deuxième module (104) ;
- une cavité (206) qui s'étend à la fois à l'intérieur du premier module (102) et à l'intérieur du deuxième module (104) ;
- au moins un raccord de source (203) pour raccorder la cavité (206) à une source de fluide sous pression ;
- au moins un raccord de pneu (201) pour raccorder la cavité (206) au pneu ;
- un premier clapet (200) disposé à l'intérieur de la cavité (206) ;
- au moins un capteur de pression ;
- des moyens de commande ;
- au moins un deuxième clapet antiretour (202) pouvant être déverrouillé pneumatiquement et disposé à l'intérieur de la cavité (206), qui peut être commandé par les moyens de commande ;
le premier clapet (200) étant disposé dans le premier module (102) et le deuxième clapet (202) étant disposé dans le deuxième module (104), **caractérisé en ce que**
le premier clapet (200) est un clapet antiretour pouvant être déverrouillé pneumatiquement, **en ce que** les moyens de commande sont réalisés de manière à commander le premier clapet (200) en fonction d'un signal reçu par le capteur de pression et **en ce que** le premier clapet (200) est réalisé de manière à commander un écoulement du fluide depuis la cavité (206) à travers le raccord de pneu (201) et inversement, et **en ce que** le deuxième clapet (202) est réalisé de manière à commander un écoulement du fluide à travers le raccord de source (203) dans la cavité (206).

2. Dispositif (100) selon la revendication 1, **caractérisé en ce que** le dispositif (100) comprend un raccord de sortie (600) pour le raccord direct de la cavité (206) à un milieu environnant et un troisième clapet pouvant être déverrouillé pneumatiquement (300), le troisième clapet (300) étant réalisé de manière à commander un écoulement du fluide depuis la cavité (206) à travers le raccord de sortie (600).

3. Dispositif (100) selon au moins l'une quelconque des revendications précédentes, **caractérisé en ce que** le dispositif (100) comprend au moins une source de fluide de commande qui est raccordée par le biais d'au moins une conduite de commande aux clapets (200 ; 202 ; 300).

4. Dispositif (100) selon la revendication 3, **caractérisé en ce que** la source de fluide de commande fait partie d'un système de freinage du véhicule.

5. Dispositif (100) selon au moins l'une quelconque des revendications précédentes, **caractérisé en ce que** le dispositif (100) comprend des moyens d'étanchéité (900) qui sont réalisés de manière à étanchéifier une région partielle d'un goujon de clapet (205 ; 207 ; 602) de chacune des clapets (200 ; 202 ; 300) par rapport à la cavité (206).

6. Dispositif (100) selon au moins l'une quelconque des revendications précédentes, **caractérisé en ce que** le premier module (102) est réalisé de manière à être fixé à une roue comprenant le pneu et à tourner lors de la rotation de la roue.

7. Dispositif (100) selon au moins l'une quelconque des revendications précédentes, **caractérisé en ce que** le deuxième module (104) est réalisé de manière à ne pas tourner lors d'une rotation du pneu.

8. Dispositif (100) selon au moins l'une quelconque des revendications précédentes, **caractérisé en ce que** le fluide est de l'air et **en ce que** la source de fluide sous pression est un compresseur d'air sous pression.

9. Dispositif (100) selon au moins l'une quelconque des revendications précédentes, **caractérisé en ce que** le capteur de pression est disposé dans la cavité (206) ou est raccordé à la cavité (206).

10. Dispositif (100) selon au moins l'une quelconque des revendications précédentes, **caractérisé en ce que** les moyens de commande sont réalisés pour commander les clapets (200 ; 202 ; 300) et la source de fluide sous pression.

11. Dispositif (100) selon la revendication précédente, **caractérisé en ce que** la source de fluide de commande et l'écoulement d'un fluide de commande sortant de la source de fluide de commande et s'écoulant à travers la conduite de commande peuvent être commandés par les moyens de commande, les moyens de commande étant réalisés de manière à commander au moins en partie sans fil la source de fluide de commande et l'écoulement du fluide de commande.

12. Dispositif (100) selon au moins l'une quelconque des revendications 10 ou 11, **caractérisé en ce que** le deuxième module (104) est raccordé exclusivement au premier module (102) et à des conduites de fluide flexibles.

13. Dispositif (100) selon au moins l'une quelconque des revendications précédentes, **caractérisé en ce que** le dispositif (100) est réalisé pour la régulation individuelle d'une pression de pneu dans chaque pneu du véhicule.
